# FASCICULE DE BREVET EUROPEEN

(11) **EP 0 347 273 B1**
(45) Date de publication et mention de la délivrance du brevet: **29.09.1993**
(21) Numéro de dépôt: 89401472.9
(22) Date de dépôt: 30.05.1989
(51) Int. Cl.: C01B 33/34, C01B 33/18

(54) **Nouveau procédé de synthèse de zéolithes de type structural MTT**
Verfahren zur Synthese von Zeolithen vom MTT-Strukturtyp
Process for the synthesis of MTT structure-type zeolites

(30) Priorité: 15.06.1988 FR 8808105
(43) Date de publication de la demande: 20.12.1989
(73) Titulaire: INSTITUT FRANCAIS DU PETROLE, 92502 Rueil-Malmaison (FR)
(72) Inventeur: Patarin, Joel, F-68200 Mulhouse (FR); Lamblin, Jean-Marc, F-68200 Mulhouse-Dornac (FR); Faust, Anne-Catherine, F-68200 Mulhouse (FR); Guth, Jean-Louis, F-68200 Mulhouse (FR); Raatz, Francis, F-78260 Achères (FR)

(56) Documents cités:
- EP-A- 0 042 226
- EP-A- 0 063 436
- EP-A- 0 102 497
- EP-A- 0 108 486
- EP-A- 0 125 078
- FR-A- 2 313 980
- FR-A- 2 564 451
- US-A- 4 073 865
- ZEOLITES, vol. 3, janvier 1983, pages 8-11, Butterworth & Co. (Publishers) Ltd, Guildford, GB; L.M. PARKER et al.: "Synthesis and some properties of two novel zeolites, KZ-1 and KZ-2"

## Description

La présente invention concerne un nouveau procédé de synthèse de zéolithes du type MTT et les produits obtenus par ce procédé.

Les zéolithes sont des tectosilicates cristallisés. Leur structure tridimensionnelle est construite par un assemblage de tétraèdres TO₄, mettant en commun leurs sommets, deux tétraèdres différents n'ayant qu'un oxygène en commun. Dans les zéolithes du type aluminosilicate, qui sont les plus communes, T représente le silicium tétravalent ainsi que l'aluminium trivalent. Les cavités et canaux, de dimensions moléculaires, de la charpente aluminosilicatée accueillent les cations compensant le déficit de charge lié à la présence de l'aluminium trivalent dans les tétraèdres.

La composition chimique des zéolithes contenant dans leur charpente les éléments Al et Si, peut être représentée par la formule approchée suivante :

M_{2/n}O, Al₂O₃, xSiO₂

où M représente un cation de valence n, tel que par exemple un alcalin, un alcalino-terreux ou un cation organique ; x est susceptible de varier en fonction des structures entre deux et l'infini, auquel cas la zéolithe est une silice microporeuse.

Chaque type de zéolithe possède une structure poreuse distincte. Le variation des dimensions et formes de pores d'un type à l'autre entraîne un changement des propriétés adsorbantes et catalytiques. Seules les molécules de certaines dimensions et formes sont capables d'entrer dans les pores d'une zéolithe particulière. La composition chimique avec en particulier, la nature des cations de compensation échangeables, est également un facteur important intervenant dans la sélectivité de l'adsorption et surtout dans les propriétés catalytiques de ces produits.

Du fait de leurs propriétés de sélectivité géométrique et d'échange cationique, les zéolithes sont utilisées industriellement sur une large échelle aussi bien en adsorption (séchage de gaz, séparation de composés aromatiques, etc...) qu'en catalyse (craquage catalytique, hydrocraquage, isomérisation, etc...).

Bien que de nombreuses zéolithes du type aluminosilicate existent dans la nature, la recherche de produits ayant des propriétés nouvelles a conduit au cours de ces dernières années à la synthèse d'une grande variété de ces aluminosilicates à structure zéolithique. Parmi les nouvelles structures dont la synthèse a été récemment réussie, on trouve les zéolithes de structure MTT appelées également selon les auteurs :
Eu-1 (brevet européen E.P. 42226)
Eu-4 (brevet européen E.P. 63436)
Eu-13 (brevet européen E.P. 108486)
ISI-4 (brevet européen E.P. 102497)
ZSM-23 (brevets américains U.S.P. 4076842
U.S.P. 4104151
U.S.P. 4490342)
KZ-1 (publication : Zeolites 3 (1983) 8).

Toutes ces zéolithes correspondant au même type structural MTT ont été obtenues dans des milieux de synthèse que l'on peut qualifier de classiques ; c'est-à-dire des milieux alcalins dont les pH sont généralement supérieurs à 9.

Par rapport aux synthèses réalisées en milieu fluorure, les synthèses effectuées en milieu classique alcalin (OH)⁻ présentent un certain nombre d'inconvénients.

En effet, en milieu basique la plupart des zéolithes synthétisées sont métastables et on risque l'apparition, au cours de la synthèse, de phases solides plus stables, ainsi que la précipitation de phases non désirées. Cette difficulté ne fait que s'accroître lorsque les quantités préparées augmentent, c'est-à-dire lorsque l'on passe des essais laboratoire au stade industriel. Par ailleurs, ces zéolithes métastables dans le milieu réactionnel basique ne sont obtenues que grâce à une forte sursaturation en espèces actives dans le milieu, ce qui provoque une nucléation rapide et, par conséquent conduit à des cristaux de zéolithe de petites tailles, les dimensions moyennes de ces cristaux se situant dans la domaine du micromètre. L'élaboration de cristaux de plus grandes tailles est donc difficile. Or, dans certaines applications d'échange d'ions, d'adsorption, ou de catalyse, il serait intéressant de pouvoir travailler avec des cristaux de grandes tailles ce qui, par exemple, permettrait d'éviter le conditionnement des zéolithes par agglomération avec tous les inconvénients que cela comporte.

De nombreuses applications, en particulier dans la catalyse acide, nécessitent des zéolithes sous une forme protonée et complètement débarrassée de leurs cations de compensation alcalins ou alcalino-terreux introduits lors de la synthèse. On peut y accéder par des procédés d'échange d'ions répétés et longs avec des cations NH₄⁺ suivis de calcination pour les décomposer en cations H⁺. Cette étape d'échange d'ions pourrait être éliminée si l'on pouvait remplacer entièrement les cations alcalins ou alcalino-terreux par des cations NH₄⁺ lors de la synthèse. Or, ceci n'est pas possible lorsque le pH dépasse sensiblement 10, NH₄⁺ étant dans ces conditions transformé en NH₃. Par ailleurs, les synthèses effectuées à des pH où le cation NH₄⁺ est stable sont difficiles et longues à cause de la faible solubilité des sources de silice à ces bas pH.

Un avantage supplémentaire des synthèses réalisées en milieu fluorure par rapport aux synthèses classiques est de conduire à des solides dont les propriétés acides et d'échange ionique sont de natures différentes. Les catalyseurs acides préparés à partir de solides obtenus en milieu fluorure présentent des propriétés catalytiques améliorées. Il est à ce niveau très important de noter que la structure cristallographique d'un solide ne suffit pas pour définir entièrement les propriétés de ce solide, et plus particulièrement les propriétés acides qui jouent un rôle primordial en catalyse.

Les synthèses en milieu fluorure sont connues : ainsi la demande de brevet FR 2.564.451 décrit la synthèse en milieu fluoré d'une silice microporeuse et le brevet US 4,073,865 décrit la synthèse en milieu fluoré d'une silice polymorphe.

Contrairement à leurs homologues synthétisés selon l'art antérieur, les zéolithes de structure MTT préparées selon l'invention contiennent, après l'étape de synthèse et également après l'étape d'élimination des composés organiques introduits au cours de la synthèse, du fluor. Le fluor comme nous le verrons confère aux zéolithes de structure MTT selon l'invention des propriétés acides et d'échange ionique tout à fait particulières.

L'invention a donc pour objet une nouvelle zéolithe synthétique du type MTT, un nouveau procédé de synthèse de cette structure où les inconvénients cités précédemment sont évités et qui confère aux zéolithes suivant l'invention des propriétés, particulièrement des propriétés acides améliorées. L'invention a également pour objet les applications en catalyse et en adsorption de ce nouveau type de solide.

Les nouvelles zéolithes suivant l'invention sont caractérisées par :
a) une formule chimique approchée

   M_{2/n}O, Al₂O₃, xSiO₂,

   où M représente un proton résultant de la décomposition thermique des cations comme par exemple NH₄⁺ ou dipropylammonium, isopropylammonium pyrolidinium présents seuls ou en mélange dans le milieu de synthèse et(ou) un cation de métal non décomposable issu ou non du milieu réactionnel comme par exemple les cations alcalins et/ou alcalino-terreux ou d'autres métaux précisés ci-après :
   n est la valence des dits cations
   x est un nombre compris entre 50 et 40 000.
b) un diagramme de diffraction x représenté dans le tableau I de la description,
c) une teneur en fluor, mesurée après l'étape d'élimination des composés organiques décrites ci-après entre 0,01 et 2 % en poids.

Les nouvelles zéolithes de structure MTT selon l'invention peuvent généralement présenter une dimension de cristaux compris entre 0,1 et 250 µm (micromètres) et de préférence entre 2 et 130µm.

La présence, après l'étape d'élimination des composés organiques (conditions précisées ci-après), de fluor dans les zéolithes de structure MTT selon l'invention à des teneurs de préférence comprises entre 0,02 et 1,0 % en poids entraîne des modifications des propriétés acides et d'échange ionique des solides. Ceux-ci se distinguent alors tout à fait des zéolithes de structure MTT connues dans l'art antérieur. Les solides selon l'invention sont caractérisés par un spectre de vibration infrarouge dans la région 3800 à 3500 cm⁻¹ qui présente des bandes attribuées classiquement aux groupes Si-OH (zone 3730-3750 cm⁻¹) et aux groupes Al-OH structuraux (région 3580-3640 cm⁻¹) très peu intenses voire inexistantes par rapport à celles d'une zéolithe de structure MTT classique de rapports Si/Al voisin.

L'absence ou la quasi absence de groupe Al-OH structuraux dans les zéolithes selon l'invention est confirmée par les capacités d'échange ionique de ces solides. En effet, les capacités d'échange ionique pour des cations tels que par exemple Na⁺, K⁺, Ga³⁺, Pt(NH₃)₄²⁺ etc... sont très inférieures aux capacités d'échanges ioniques totales que l'on peut calculer à partir de la teneur en aluminium de la charpente cristalline.

Ces solides ne présentant pas ou peu d'hydroxyles structuraux et dont la capacité d'échange est réduite possèdent de manière surprenante des propriétés acides remarquables. Ainsi la thermodésorption d'ammoniac qui permet de rendre compte de l'acidité globale d'un solide (nombre et force des différents types de sites acides) donne un spectre de désorption qui montre clairement que les solides selon l'invention sont très acides. Les spectres de thermodésorption d'ammoniac sont comparables à ceux que l'on obtiendrait avec des zéolithes de structures MTT classiques, cependant, il est clair que l'acidité des solides selon l'invention est d'une nature différente.

Sans nous lier à une théorie particulière, on peu supposer par exemple que les solides selon l'invention ont à la place des sites 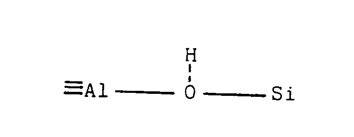
de charpente classique, des sites du type : 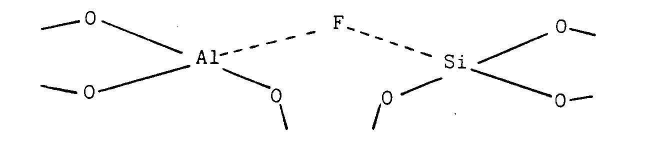
La nature précise des sites acides présents dans les solides de structure MTT selon l'invention reste à préciser, cependant il est clair que ces sites sont liés en grande partie à la présence de fluor et se distinguent, de par leur nature, des sites acides des zéolithes de structure MTT classique.

Par des traitements particuliers, il est possible d'éliminer partiellement ou totalement le fluor contenu dans les solides selon l'invention sans altérer leur cristallinité.

Une technique que l'on peut utiliser pour défluorer les solides consiste à procéder à un traitement dans une solution de NH₄OH à des températures comprises par exemple entre l'ambiante et 150°C (traitement sous pression).

L'élimination partielle ou complète du fluor conduit :
- d'une part à l'apparition dans le spectre IR de deux bandes situées vers 3740 et 3608 cm⁻¹ correspondant d'après les attributions admises dans la littérature scientifique aux groupes silanols terminaux et aux groupes Al-OH structuraux respectivement et
- d'autre part à la restauration de la capacité d'échange ionique telle que l'on peut la calculer à partir de la teneur en aluminium de charpente des solides.

Ainsi en fonction du traitement de défluoration, on peut obtenir, pour un même rapport Si/Al de charpente, des solides contenant une quantité de groupe Al-OH et Si-OH ainsi qu'une capacité d'échange ionique variables. Un solide partiellement défluoré contient donc outre des sites acides du type Al-OH pouvant jouer un rôle de sites d'échanges, des sites acides particuliers dont la nature exacte n'est pas encore totalement élucidée mais qui résultent indéniablement de l'introduction dans les solides de fluor lors de la synthèse.

L'invention concerne également le procédé de synthèse des zéolithes de structure MTT dont nous venons de décrire quelques propriétés. Le procédé de synthèse consiste en ce que :
a) on forme un mélange réactionnel ayant un pH inférieur à 10 comprenant de l'eau, au moins une source de silice, éventuellement une source d'un sel d'aluminium, au moins une source d'agent mobilisateur contenant des ions fluorure (F⁻) et au moins une source d'agent structurant pouvant fournir des cations organiques, par exemple les cations ; dipropylammonium (DIPA⁺), isopropylammonium (ISOPA⁺), pyrolidinium (PYROL⁺). Le dit mélange ayant une composition en termes de rapports molaires

| | |
|---|---|
| SiO₂/Al₂O₃ | ≧20 |
| F⁻/SiO₂ | 0,1 à 6 |
| cations organiques/SiO₂ | 0,1 à 6 |
| H₂O/SiO₂ | 6 à 200 |

b) on maintient le dit mélange à une température de chauffage au plus égale à 250°C jusqu'à ce qu'on obtienne un composé cristallin et
c) on calcine le dit composé à une température supérieure à 350°C et de préférence supérieure à 450°C dans un milieu contenant de l'oxygène.

On peut avantageusement chauffer le mélange réactionnel dans un autoclave revêtu intérieurement de polytétrafluoroéthylène (PTFE) entre environ 60°C et 210°C et de préférence entre 70°C et 190°C pendant une durée qui peut varier de 24 à 1300 heures selon la température de réaction, jusqu'à l'obtention d'un solide cristallisé que l'on sépare des eaux-mères par filtration et qui est ensuite lavé à l'eau distillée.

De manière avantageuse on peut préparer le mélange réactionnel à un pH compris entre 4 et 10 et de manière préférée entre 6 et 9.

Selon un mode préféré de préparation, les rapports molaires des constituants du mélange réactionnel peuvent être compris dans les intervalles (exprimés en rapports molaires) suivants :

| | |
|---|---|
| SiO₂/Al₂O₃ | ≧100 |
| F⁻/SiO₂ | 1-5 |
| structurant organique/SiO₂ | 1-5 |
| H₂O/SiO₂ | 15-80 |

On peut ajouter audit mélange réactionnel au moins un sel complémentaire dans un rapport molaire sel complémentaire/SiO₂ compris généralement entre environ 0,1 et 4 et de préférence entre 0,2 et 0,5 et/ou au moins un germe de cristal de la zéolithe formée selon l'invention dans un rapport pondéral cristal/SiO₂ compris généralement entre 0,01 et 0,1 et de manière préférée entre environ 0,02 et 0,03, de telle sorte que la morphologie, la taille des cristaux ainsi que la cinétique de la réaction de cristallisation peuvent être avantageusement contrôlées.

On calcine avantageusement les cristaux de zéolithe à une température comprise entre environ 520 et 800°C sous atmosphère de gaz sec comme par exemple de l'air ou un gaz inerte, de façon à décomposer l'agent structurant présent dans les pores de la zéolithe.

On peut travailler avantageusement en milieu agité, ce qui permet de diminuer considérablement le temps de réaction.

Le pH du milieu réactionnel, inférieur à 10, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de silice peuvent être utilisées. On peut citer les silices sous forme d'hydrogels, d'aérogels, de suspensions colloïdales ainsi que les silices résultant de la précipitation de solutions de silicates solubles ou de l'hydrolyse d'esters siliciques comme l'ester tétraéthylique de l'acide orthosilicique Si(OC₂H₅)₄ ou de complexes comme le fluorosilicate de sodium Na₂SiF₆ ou d'ammonium (NH₄)₂SiF6.

Parmi les sels d'aluminium utilisés, on choisira de préférence le chlorure d'aluminium hydraté : AlCl₃, 6H₂O, le nitrate d'aluminium nonahydraté Al(NO₃)₃, 9H₂O, le sulfate d'aluminium à 16 molécules d'eau, ou le fluorure d'aluminium trihydraté AlF₃, 3H₂O. Par ailleurs, au lieu de partir de sources séparées de silice et d'un sel d'aluminium on peut également prendre des sources où les deux éléments sont combinés comme par exemple un gel alusilicaté fraîchement précipité.

Les anions fluorure F⁻ peuvent généralement être introduits sous forme de sels desdits agents structurants ou d'ammonium ou de métaux alcalins comme par exemple NaF, NH₄F, NH₄HF₂, ISOPA-F, DIPA-F, PYROL-F ou sous forme de composés hydrolysables pouvant libérer des anions fluorure dans l'eau comme le fluorure de silicium SiF₄ ou le fluorosilicate d'ammonium (NH₄)₂ SiF₆ ou de sodium Na₂SiF₆.

Les cations ISOPA⁺, DIPA⁺, PYROL⁺ qui sont les agents structurants, sont ajoutés de préférence sous la forme des amines correspondantes ou après salification de ces dernières par l'acide fluorhydrique par exemple. Les acides ou sels d'acides, les bases ou sels basiques ajoutés éventuellement en complément, pour amener le pH du milieu à la valeur désirée peuvent être choisis parmi les acides courants comme par exemple HF, HCl, HNO₃, H₂SO₄, CH₃COOH où les sels acides comme par exemple NH₄HF₂, KHF₂, NaHSO₄, les bases courants comme par exemple NaHCO₃, Na₂CO₃, CH₃COONa,Na₂S, NaHS ou les mélanges tampons comme par exemple (CH₃COOH, CH₃COONa) ou (NH₄OH, NH₄Cl).

Après l'étape d'élimination des cations organiques et éventuellement de défluoration partielle ou totale, on peut introduire dans des zéolithes de structure MTT selon l'invention par les techniques d'échange ionique bien connues dans l'art antérieur, au moins un élément du tableau périodique, dont les cations peuvent être préparés en milieu aqueux et choisi dans la famille constituée par les groupes IIA, IIIA, IVA, IB, IIB, IIIB, IVB, et VIIIA de la classification périodique des éléments. On citera à titre d'exemple les cations alcalins, alcalino-terreux, les cations de terres-rares, Fe^{II}, Fe^{III}, Co^{II}, Co^{III}, Ni^{II}, Cu^{II}, Zn^{II}, Ag^{I}, Pt^{II}, etc.

L'identification des zéolithes de structure MTT obtenues selon le procédé se fait de manière commode à partir de leur diagramme de diffraction des rayons X. Ce diagramme de diffraction peut être obtenu à l'aide d'un diffractomètre en utilisant la méthode classique des poudres avec le rayonnement k alpha du cuivre. Un étalon interne permet de déterminer précisément les valeurs des angles 2 thêta associés aux pics de diffraction. Les différentes distances interréticulaires dhkl, caractéristiques de l'échantillon, sont calculées à partir de la relation de BRAGG. L'estimation de l'erreur de mesure delta (dhkl) sur dhkl se calcule, en fonction de l'erreur absolue (2 thêta) affectée à la mesure de 2 thêta, par la relation de BRAGG. En présence d'un étalon interne cette erreur est minimisée et prise couramment égale à ± 0,05°C. L'intensité relative I/Io affectée à chaque valeur de dhkl est estimée à partir de la hauteur du pic de diffraction correspondant. Cette dernière peut également être déterminée à partir d'un cliché sur chambre Debye Scherrer. On utilise souvent une échelle de symboles pour caractériser cette intensité : FF = très forte, F = forte, mF = moyenne à forte, m = moyenne, mf = moyenne à faible, f = faible, ff = très faible, fff = très très faible.

Le tableau I ci-après, représente le diagramme de diffraction des rayons X caractéristique des zéolithes de structure MTT obtenues selon l'invention avant calcination. Dans la colonne des dhkl on a représenté les valeurs extrêmes que peuvent prendre les différentes équi-distances réticulaires dhkl. A chacune de ces valeurs doit être affectée l'erreur de mesure delta (dhkl). Celle-ci est généralement comprise entre -+ 0,07 et -+ 0,002 selon la valeur de 2 thêta.

Les zéolithes de structure MTT selon l'invention peuvent être utilisées en catalyse soit pures soit associées à un autre composé. Dans ce cas le catalyseur renferme environ au moins 0,1 % et de préférence au moins 20 % de zéolithe MTT selon l'invention, le complément à 100 % étant constitué par une autre zéolithe ou par une matrice comprenant les composés choisis dans le groupe formé par l'alumine, la silice, la magnésie, la zircone, l'oxyde de titane, l'oxyde de bore, une argile et tout autre combinaison d'au moins deux des composés précités. Eventuellement le catalyseur peut comprendre au moins une fonction hydrogénante ou déshydrogénante apportée par au moins un métal choisi de préférence parmi les groupes IA et VIIIA apportée par un sulfure de métal choisi parmi les groupes VIA et VIIIA.

Parmi les applications en catalyse des zéolithes de structure MTT selon l'invention on peut citer à titre d'exemple, l'alkylation, la dismutation et la transalkylation des aromatiques, l'oligomérisation des oléfines, la conversion des alcools comme le méthanol en hydrocarbures, la conversion du propène en hydrocarbures à forte teneur en aromatiques, l'amélioration de la tenue au froid des gas oils et le craquage catalytique.

Les exemples qui suivent sont destinés à illustrer l'invention sans toutefois en limiter la portée.

**TABLEAU 1**

| Dhkl | I/Io | dhkl | I/Io |
|---|---|---|---|
| 11,12 - 10,78 | FF | 3,40 - 3,41 | mF |
| 9,72 - 9,88 | F | 3,020 - 2,980 | ff (tr- |
| | | | ès lar- |
| | | | ge) |
| 7,62 - 7,75 | F | 2,810 - 2,817 | m |
| 5,97 - 6,05 | m | 2,776 - 2,788 | m |
| 5,53 - 5,57 | F | 2,610 - 2,700 | ff (très large) (plusieurs pics) |
| 5,38 - 5,46 | m | 2,435 - 2,437 | m |
| 4,83 - 4,94 | ff | 2,376 - 2,377 | ff |
| 4,48 - 4,50 | f | 2,307 - 2,309 | ff |
| 4,39 - 4,41 | m | 2,234 - 2,241 | ff |
| 4,23 - 4,24 | f | 2,180 - 2,190 | ff |
| 3,87 - 3,88 | F | 2,030 - 2,040 | ff |
| 3,70 - 3,65 | FF | 1,970 - 1,980 | ff |
| 3,57 - 3,60 | mF | 1,88 - 1,89 | mf |
| 3,54 - 3,50 | F | | |

### EXEMPLE 1 :

Préparation d'une zéolithe MTT de rapport SiO₂/Al₂O₃ supérieur à 34000.

On prépare le sel de dipropylamine de formulation (C₃H₇)₂NH₂⁺, F⁻ par salification de l'amine correspondante avec de l'acide fluorhydrique. Au sel ainsi formé sont ajoutés 30 cm³ d'eau distillée. On mélange la solution obtenue à 3,34 g de silice pulvérulante obtenue par pyrohydrolyse du tétrachlorure de silicium et commercialisée par la société DEGUSSA sous le nom d'"AEROSIL". Cette dernière contient 3 % en masse d'eau environ, la teneur pondérale en aluminium est inférieure à 0,003 %.

La composition molaire du mélange réactionnel dans ce cas est la suivante :
1SiO₂ ; 5 dipropylamine, 5HF ; 3 OH₂O : fraction molaire engagée 5,5 %.

Le mélange pH = 6 à 7 est chauffé pendant 45 jours à 170°C dans un autoclave renfermant un flacon de 120 cm³ en polytétrafluoroéthylène. La solution finale est constituée de deux phases dont les pH sont respectivement égaux à 7 pour la phase la plus dense et 5,7 pour la phase huileuse. Le solide obtenu est placé dans une cuve à ultra-sons afin de séparer toutes traces de gel résiduel. On recueille 1,6 g de zéolithe MTT.

L'analyse chimique du solide obtenu est la suivante :
92 % SiO₂ (AEROSIL) 6,5 % (C₃H₇)₂NH⁺₂ hydraté 0,92 %F⁻.

Le diagramme de diffraction des rayons X est tout à fait analogue à celui de la zéolithe MTT du tableau I.

Après calcination à 650°C sous air pendant 5h la perte de masse observée est de 7,4 % et aucun changement structural significatif n'est observé. La teneur en élément fluor est alors de 0,1 % en poids.

Les cristaux obtenus sont aciculaires et leur plus grande dimension est comprise entre 10 et 130 µm.

### EXEMPLE 2.

Préparation d'une zéolithe MTT selon l'invention à partir d'une autre source d'ions fluorure que celle utilisée dans l'exemple 1.

Dans cette préparation on utilise comme source d'agent fluorure, le dihydrogénofluorure d'ammonium NH₄HF₂ à la place de l'acide fluorhydrique.

Les sources de silice et d'amine sont par ailleurs les mêmes que celles de l'exemple 1.

La composition molaire du mélange est de :
1SiO₂ ; 5(C₃H₇)₂NH ; 2?5 NH₄HF₂ ; 30H₂O on engage 5,0 % des proportions molaires.

Le mélange réactionnel placé dans le même type d'autoclave que précédemment est porté à une température de 170°C pendant 46 jours : le pH initial est = 8,5.

Après réaction, le solide est successivement soniqué, lavé à l'eau bidistillée, filtré sur filtre millipore, puis séché à l'étuve à 80°C pendant 24 h.

On obtient 1,5 g de produit, les cristaux ont une taille voisine de (120 x 2) micromètres.

Le rapport SiO₂/Al₂O₃ est supérieur à 25000.

Le diagramme de diffraction des rayons X de ce produit correspond à celui de la zéolithe MTT du tableau I. Le produit calciné à 650°C dans les mêmes conditions que celles de l'exemple 1 perd 7,1 % en poids et aucun changement structural significatif n'est observé.

### EXEMPLE 3.

Cet exemple illustre la possibilité d'utiliser une autre source de silice que celle de l'exemple 1 et de travailler en milieu agité, ce qui permet de diminuer considérablement les temps de synthèse.

On prépare dans ce cas un gel silicaté par hydrolyse de l'ester tétraéthylique de l'acide orthosilicique Si(OC₂H₅)₄.

25 cm³ de Si(OC₂H₅)₄ et 50 cm³ d'eau sont portés à reflux pendant 3 h, après précipitation du gel silicaté, celui-ci est séché à 80°C pendant 2 jours, puis finement broyé, le pourcentage pondéral en silicium est de 39 %.

On réalise ensuite un mélange de composition molaire suivante :
1Si ; 2HF ; 2(C₃H₇)₂NH ; 30H₂O ; fraction molaire 5 %.

L'amine est au préalable salifiée par l'acide fluorhydrique. L'ensemble, placé dans un autoclave en inox de 120 cm³ revêtu d'une chemise en P.T.F.E., est porté à une température de 195°C dans une étuve équipée d'un système d'agitation.

Après 10 jours de synthèse nous obtenons 1,2 g de cristaux aciculaires dont la plus grande dimension est de l'ordre de 3 à 4 micromètres.

Le diagramme de diffraction des rayons X de cette zéolithe correspond à celui de la zéolithe MTT du tableau I.

Le rapport molaire SiO₂/Al₂O₃ est supérieur à 30000.

La zéolithe calcinée perd 7,3 % en poids, sa teneur en fluor est de 0,08 % et le diagramme de diffraction X ne présente pas de changement par rapport à celui du produit brut de synthèse.

Cette zéolithe placée à l'humidificateur sous une pression relative de vapeur d'eau P/Po = 0,8 reste hydrophobe.

### EXEMPLE 4.

Cet exemple illustre la possibilité de synthétiser la zéolithe MTT en présence de germes.

On réalise un mélange dont la composition molaire est la suivante :
1SiO₂(AEROSIL) 2(C₃H₇)₂NH, 2HF ; 40H₂O ; fraction molaire = 11 %.

La source de silice utilisée est la même que celle de l'exemple 1.

Le mélange réactionnel contient également 1,40 % en poids par rapport à la quantité de silice engagée de cristaux d'une zéolithe MTT finement broyés obtenus par un procédé identique à celui de l'exemple 2.

Le pH initial du mélange est de 8,5. L'ensemble placé dans le même type d'autoclave que pour les exemples précédents est porté à une température de 170°C, l'autoclave est animé d'un mouvement de rotation pendant une durée de 13 jours. Le pH final est de 8,5.

Après lavages et filtrations on obtient 5,8 g de zéolithe MTT dont le diagramme de diffraction des rayons X est conforme à celui du tableau I. Le solide est ensuite calciné à 650°C dans les mêmes conditions que celles de l'exemple 1.

L'analyse chimique conduit à un rapport SiO₂/Al₂O₃ supérieur à 25000 et à une teneur en fluor de 0,120 % en poids.

### EXEMPLE 5.

Préparation d'une zéolithe MTT de rapport SiO₂/Al₂O₃ égal à 120.

Pour cet exemple, nous préparons un xérogel alusilicaté par chauffage à reflux et sous forte agitation de l'ester tétraéthylique de l'acide orthosilicique Si(OC₂H₅)₄ avec une solution aqueuse de chlorure d'aluminium AlCl₃, 6H₂O. Après précipitation le gel alusilicaté est séparé de l'éthanol formé au cours de l'hydrolyse par distillation. Il est ensuite séché à l'étuve à 90°C puis finement broyé. La composition pondérale du gel est alors :
% Si 38
% Al 0,7.

On réalise ensuite un mélange de composition molaire 1Si ; 0,019 Al ; 2(C₃H₇)₂NH ; 2HF ; 40H₂O, fraction molaire engagé 0,11.

L'amine est au préalable salifiée par l'acide fluorhydrique. Au mélange ainsi formé sont ajoutés 2 % de germes d'une zéolithe MTT de même composition, obtenue lors d'une précédente synthèse.

Le mélange réactionnel est placé dans le même type d'autoclave que pour les exemples précédents, puis il est porté à une température de 170°C dans une étuve équipée d'un système d'agitation.

Après 14 jours de synthèse, le produit est séparé de toutes traces de gel résiduel par sonication. On récupère alors 4,1 g d'agrégats. L'observation de ces derniers en microscopie optique montre qu'ils sont en fait constitués d'un ensemble de fibrilles de 60µm (micromètres) de longueur.

Le diagramme de diffraction du produit obtenu correspond à celui de la zéolithe MTT du tableau I de l'invention. Cependant on observe des changements dans l'intensité de certaines raies de diffraction.

De tels changements sont attribuables à des phénomènes d'orientations préférentielles puisqu'ils ne sont pas observés lorsque les enregistrements sont effectués sur chambre DEBYE-SCHERRER.

Après élimination du structurant organique par calcination du produit brut de synthèse sous air à 700°C pendant 5 h, la composition chimique du solide, exprimée en pourcentage massique est la suivante : SiO₂ 97 %, Al₂O₃ 1,3 %, % F⁻ 0,06 %, H₂O 1,5 %.

Le rapport molaire Si/Al de la zéolithe MTT est voisin de 60.

### EXEMPLE 6.

Cet exemple illustre la possibilité de préparer une zéolithe MTT de rapport Si/Al voisin de 50 en utilisant la même source de silice que celle de l'exemple 1.

On prépare le sel de dipropylamine de formulation (C₃H₇)₂NH₂⁺, F⁻ par salification de l'amine correspondante avec l'acide fluorhydrique.

Par ailleurs, on mélange sous forte agitation une solution de chlorure d'aluminium à 6,67 g de silice AEROSIL.

Les deux préparations sont ensuite placées ensemble dans une chemise en polytétrafluoréthylène. La composition molaire du mélange est la suivante :
0,11 SiO₂ ; 0,0022 AlCl₃ ; 6H₂O, 0,22HF ; 0,22 (C₃H₇)₂NH, 2,75H₂O
ensemencement avec 0,14 g de germes d'une zéolithe MTT de rapport molaire Si/Al = 60 ; pH initial = 8.

La préparation est portée à une température de 170°C dans une étuve équipée d'un système d'agitation. La durée de la synthèse est de 15 jours.

Après synthèse, le pH du mélange réactionnel est de 8,5. Le solide obtenu est lavé, soniqué, puis filtré, on recueille ainsi 4,2 g d'une zéolithe MTT dont la dimension des cristaux aciculaires est de l'ordre de 70 micromètres.

Le diagramme de diffraction des rayons X est tout à fait semblable à celui de la zéolithe MTT préparé dans l'exemple 5. Après clacination à 700°C sous air le rapport molaire Si/Al est de 60.

### EXEMPLE 7.

Préparation d'une zéolithe MTT selon l'invention à partir d'un agent structurant autre que celui utilisé dans les exemples précédents.

Cet exemple illustre la possibilité d'utiliser comme agent structurant l'isopropylamine.

Les sources de silice et de fluorure sont les mêmes que celles de l'exemple 1.

La composition molaire du mélange est alors la suivante :
1SiO₂, 5 isopropylamine, 5HF, 50H₂O : fraction molaire engagée 4 %. La réaction est ensemencée avec 0,05 g d'une zéolithe MTT préparée selon l'exemple 4.

L'amine est au préalable salifiée par l'acide fluorhydrique, le pH du milieu réactionnel est de 7,5.

Le mélange est placé dans le même type d'autoclaves que pour les exemples précédents puis il est porté à une température de 170°C pendant une durée de 3 jours dans une étuve équipée d'un système d'agitation (vitesse de rotation 4 t.min⁻¹).

Après réaction (pH final = 8) on récupère 0,9 g de zéolithe MTT. Les traces de gel amorphe sont éliminées par ultra sonication, et les cristaux obtenus ont une dimension de l'ordre de 20 µm.

Le diagramme de diffraction des rayons X du produit brut de synthèse est tout à fait analogue à celui de la description (tableau 1).

Le rapport molaire Si/Al de la zéolithe MTT est supérieur à 18000.

## Revendications

1. Zéolithe cristalline synthétique du type MTT caractérisée par :
a) la formule chimique approchée suivante :
M_{2/n}O, Al₂O₃, x SiO₂
où M représente un proton et/ou un cation métallique,
n est la valence dudit cation,
x est un nombre compris entre 50 et 40000,
b) un diagramme de diffraction des rayons X représenté dans le tableau ci-dessous :
| Dhkl | I/Io | dhkl | I/Io |
|---|---|---|---|
| 11,12 - 10,78 | FF | 3,40 - 3,41 | mF |
| 9,72 - 9,88 | F | 3,020- 2,980 | ff (très large) |
| 7,62 - 7,75 | F | 2,810- 2,817 | m |
| 5,97 - 6,05 | m | 2,776- 2,788 | m |
| 5,53 - 5,57 | F | 2,610- 2,700 | ff (très large) (plusieurs pics) |
| 5,38 - 5,46 | m | 2,435- 2,437 | m |
| 4,83 - 4,94 | ff | 2,376- 2,377 | ff |
| 4,48 - 4,50 | f | 2,307- 2,309 | ff |
| 4,39 - 4,41 | m | 2,234- 2,241 | ff |
| 4,23 - 4,24 | f | 2,180- 2,190 | ff |
| 3,87 - 3,88 | F | 2,030- 2,040 | ff |
| 3,70 - 3,65 | FF | 1,970- 1,980 | ff |
| 3,57 - 3,60 | mF | 1,88 - 1,89 | mf |
| 3,54 - 3,50 | F | | |
c) une teneur en fluor comprise entre environ 0,01 % et 2 % en poids.

2. Zéolithe selon la revendication 1 caractérisée en ce qu'elle comporte des cristaux dont au moins une dimension est comprise entre 0,1 et 250 micromètres.

3. Zéolithe selon l'une quelconque des revendications 1 et 2 caractérisée en ce que les rapports molaires SiO₂/Al₂O₃ sont compris entre environ 100 et 40000.

4. Procédé de préparation d'une zéolithe synthétique cristalline selon l'une des revendications 1 à 3 caractérisé en ce que :
a) on forme un mélange réactionnel ayant un pH inférieur à 9 comprenant de l'eau, au moins une source de silice, au moins une source d'un sel d'aluminium, au moins une source d'agent mobilisateur contenant des ions fluorure et/ou au moins une source d'agent structurant pouvant fournir des cations organiques, ledit mélange ayant une composition en termes de rapports molaires, comprise dans les intervalles de valeurs suivants :
| | |
|---|---|
| SiO₂/Al₂O₃ | ≧ 20 |
| F-/SiO₂ | 0,1 à 6 |
| cations organiques/SiO₂ | 0,1 à 6 |
| H₂O/SiO₂ | 6 à 200, |
et la source d'agent structurant étant une source pouvant fournir des cations organiques choisis parmi les cations isoalkylammonium et dialkylammonium.
b) on maintient ledit mélange à une température de chauffage au plus égale à environ 250° C jusqu'à ce qu'on obtienne un composé cristallin et
c) on calcine ledit composé à une température supérieure à 350° C.

5. Procédé selon la revendication 4 dans lequel la source d'agent structurant est une source pouvant fournir des cations organiques choisis parmi les cations isopropylammonium, dipropylammonium et pyrolidinium,

6. Procédé selon l'une des revendications 4 ou 5 dans lequel on prépare ledit mélange à un pH et avec une composition en termes de rapports molaires compris dans les intervalles de valeurs suivants :
| | |
|---|---|
| pH | 6-9 |
| SiO₂/Al₂O₃ | ≧ 100 |
| F⁻/SiO₂ | 1-5 |
| structurant organique/SiO₂ | 0,1 à 6 |
| H₂O/SiO₂ | 15-80, |
la source d'agent structurant étant une source pouvant fournir des cations organiques choisis parmi les cations isoalkylammonium et dialkylammonium.

7. Procédé selon l'une des revendications 4 à 6 dans lequel on ajoute au moins un sel complémentaire audit mélange à une concentration définie dans le rapport molaire, sel complémentaire par rapport à la silice compris entre 0,1 et 4 et/ou au moins un germe de cristal de la zéolithe préparée selon l'une des revendications 4 et 5 dans le rapport pondéral cristal/silice compris entre environ 0,01 et 0,1.

8. Procédé selon l'une quelconque des revendications 4 à 7 dans lequel on maintient la température de chauffage du mélange réactionnel entre environ 60 et 210° C pendant une durée d'environ 24 à 1300 heures.

9. Procédé selon l'une quelconque des revendications 4 à 8 dans lequel le milieu réactionnel peut être chauffé dans une étuve équipée d'un système d'agitation, de façon à diminuer les durées de réaction.

## Claims

1. Synthetic crystalline zeolite of the MTT type characterized by :
a) the following approximate chemical formula :
M_{2/n}O, Al₂O₃, x SiO₂
where M represents a metal proton and/or cation,
n is the valence of said cation,
x is a figure ranging from 50 to 40,000
b) an X-ray diffraction diagram represented in the Table below:
| dhkI | I/Ic | dhkI | I/Io |
|---|---|---|---|
| 11.12 - 10.78 | FF | 3.40 - 3.41 | mF |
| 9.72 - 9.88 | F | 3.020 - 2.980 | ff (very wide) |
| 7.62 - 7.75 | F | 2.810 - 2.817 | m |
| 5.97 - 6.05 | m | 2.776 - 2.788 | m |
| 5.53 - 5.57 | F | 2.610 - 2.700 | ff (very wide) (several peaks) |
| 5.38 - 5.46 | m | 2.435 - 2.437 | m |
| 4.83 - 4.94 | ff | 2.376 - 2.377 | ff |
| 4.48 - 4.50 | f | 2.307 - 2.309 | ff |
| 4.39 - 4.41 | m | 2.234 - 2.241 | ff |
| 4.23 - 2.24 | f | 2.180 - 2.190 | ff |
| 3.87 - 3.88 | F | 2.030 - 2.040 | ff |
| 3.70 - 3.65 | FF | 1.970 - 1.980 | ff |
| 3.57 - 3.60 | mF | 1.88 - 1.89 | mf |
| 3.54 - 3.50 | F | | |
c) a fluorine content ranging from about 0.01 % to about 2 % by weight.

2. A zeolite according to claim 1 characterized in that it contains crystals with at least one dimension ranging from 0.1 to 250 micrometers.

3. A zeolite according to one of claims 1 and 2 characterized in that the SiO₂/Al₂O₃ molar ratios range from about 100 to about 40,000.

4. Process for preparing a crystalline synthetic zeolite according to one of claims 1 to 3 comprising :
a) preparing a reaction mixture with a pH value lower than 9, containing water, at least one source of silica, at least one source of an aluminium salt, at least one source of a mobilizing agent containing fluoride ions and/or at least one source of a structuring agent which can supply organic cations, said mixture having a composition in terms of molar ratios included within the following value ranges :
| | |
|---|---|
| SiO₂/Al₂O₃ | ≧ 20 |
| F⁻/SiO₂ | 0.1 to 6 |
| organic cations/SiO-2 | 0.1 to 6 |
| H₂O/SiO₂ | 6 to 200 |
b) maintaining said mixture at a heating temperature of about 250°C at the most, until a crystalline compound is obtained, and
c) calcining said compound at a temperature higher than 350°C.

5. A process according to claim 4 wherein the source of structuring agent is a source which can supply organic cations selected among the isopropylammonium, dipropylammonium and pyrolidinium cations.

6. A process according to one of claims 4 or 5 wherein said mixture is prepared with a pH value and a composition in terms of molar ratios included in the following value ranges :
| | |
|---|---|
| pH value : | 6-9 |
| SiO₂/Al₂O₃ | ≧ 100 |
| F⁻/SiO₂ | 1-5 |
| organic structuring agent/SiO₂ : | 1-5 |
| H₂O/SiO₂ | 15-80. |

7. A process according to one of claims 4 to 6 wherein at least one complementary salt is added to said mixture at a concentration defined in the molar ratio, a salt complementary in relation to the silica ranging from 0.1 to 4 and/or at least one crystal nucleus of the zeolite prepared according to one of claims 4 and 5 with a crystal/silica ratio by weight ranging from about 0.01 to about 0.1

8. A process according to one of claims 4 to 7 wherein the heating temperature of the reaction mixture is maintained at a value ranging from about 60 to about 210°C for a duration ranging from about 24 to about 1,300 hours.

9. A process according to one of claims 4 to 8 wherein the reaction medium can be heated in a drying oven fitted with a stirring system in order to reduce the reaction durations.

## Patentansprüche

1. Kristalliner synthetischer Zeolith vom MTT-Typ, gekennzeichnet durch
a) die folgende chemische Nährungsformel (Summenformel):
M_{2/n}O . Al₂O₃ . x SiO₂
worin
M steht für ein Proton und/oder ein Metallkation,
n steht für die Valenz des genannten Kations
x steht für eine Zahl zwischen 50 und 40 000,
b) ein Röntgenbeugungsdiagramm, wie in der nachstehenden Tabelle dargestellt
| Dhkl | I/Io | dhkl | I/Io |
|---|---|---|---|
| 11,12 - 10,78 | FF | 3,40 - 3,41 | mF |
| 9,72 - 9,88 | F | 3,020- 2,980 | ff (sehr breit) |
| 7,62 - 7,75 | F | 2,810- 2,817 | m |
| 5,97 - 6,05 | m | 2,776- 2,788 | m |
| 5,53 - 5,57 | F | 2,610- 2,700 | ff (sehr breit) (mehrere Peaks) |
| 5,38 - 5,46 | m | 2,435- 2,437 | m |
| 4,83 - 4,94 | ff | 2,376- 2,377 | ff |
| 4,48 - 4,50 | f | 2,307- 2,309 | ff |
| 4,39 - 4,41 | m | 2,234- 2,241 | ff |
| 4,23 - 4,24 | f | 2,180- 2,190 | ff |
| 3,87 - 3,88 | F | 2,030- 2,040 | ff |
| 3,70 - 3,65 | FF | 1,970- 1,980 | ff |
| 3,57 - 3,60 | mF | 1,88 - 1,89 | mf |
| 3,54 - 3,50 | F | | |
und
c) einen Fluorgehalt zwischen etwa 0,01 und etwa 2 Gew.-%.

2. Zeolith nach Anspruch 1, dadurch gekennzeichnet, daß er Kristalle umfaßt, die in mindestens einer Dimension eine Größe zwischen 0,1 und 250 µm haben.

3. Zeolith nach einem der Ansprüche 1 und 2, dadurch gekennzeichnet, daß die SiO₂/Al₂O₃-Molverhältnisse zwischen etwa 100 und etwa 40 000 liegen.

4. Verfahren zur Herstellung eines kristallinen synthetischen Zeoliths nach einem der Ansprüche 1 bis 3, dadurch gekennzeichnet, daß man
a) ein Reaktionsgemisch mit einem pH-Wert unterhalb 9 herstellt, das enthält Wasser, mindestens eine Siliciumdioxid-Quelle, mindestens eine Aluminiumsalz-Quelle, mindestens eine Quelle für ein Fluoridionen enthaltendes Mobilisierungsmittel und/oder mindestens eine Quelle für einen Strukturbildner, der organische Kationen liefern kann, wobei das Gemisch eine Zusammensetzung mit Molverhältnissen mit Werten innerhalb der nachstehend angegebenen Bereiche aufweist:
| | |
|---|---|
| SiO₂/Al₂O₃ | ≧ 20 |
| F⁻/SiO₂ | 0,1 bis 6 |
| organische Kationen/SiO₂ | 0,1 bis 6 |
| H₂O/SiO₂ | 6 bis 200 |
und wobei es sich bei der Quelle für den Strukturbildner um eine Quelle handelt, die organische Kationen, ausgewählt aus den Isoalkylammonium- und Dialkylammonium-Kationen, liefern kann,
b) das Gemisch bei einer Erwärmungstemperatur von höchstens etwa 250°C hält, bis man eine kristalline Verbindung erhält, und
c) die genannte Verbindung bei einer Temperatur von über 350°C calciniert.

5. Verfahren nach Anspruch 4, bei dem es sich bei der Quelle für den Strukturbildner um eine Quelle handelt, die organische Kationen, ausgewählt aus den Isopropylammonium, Dipropylammonium- und Pyrrolidinium-Kationen, liefern kann.

6. Verfahren nach einem der Ansprüche 4 oder 5, bei dem man das genannte Gemisch mit einem pH-Wert und mit einer Zusammensetzung mit Molverhältnissen mit Werten, die innerhalb der nachstehend angegebenen Bereiche liegen, herstellt:
| | |
|---|---|
| pH-Wert | 6 bis 9 |
| SiO₂/Al₂O₃ | ≧ 100 |
| F⁻/SiO₂ | 1 bis 5 |
| organischer Strukturbildner/SiO₂ | 0,1 bis 6 |
| H₂O/SiO₂ | 15 bis 80 |
wobei es sich bei der Quelle für den Strukturbildner um eine Quelle handelt, die organische Kationen, ausgewählt aus den Isoalkylammonium- und Dialkylammonium-Kationen, liefern kann.

7. Verfahren nach einem der Ansprüche 4 bis 6, bei dem man dem Gemisch zusetzt mindestens ein komplementäres Salz in einer solchen Konzentration, daß das Molverhältnis zwischen dem komplementären Salz und dem Siliciumdioxid zwischen 0,1 und 4 liegt, und/oder mindestens einen Zeolith-Impfkristall, hergestellt nach einem der Ansprüche 4 und 5, in einer solchen Konzentration, daß das Gewichtsverhältnis Impfkristall/Siliciumdioxid zwischen etwa 0,01 und etwa 0,1 liegt.

8. Verfahren nach einem der Ansprüche 4 bis 7, bei dem man die Erwärmungstemperatur des Reaktionsgemisches während einer Dauer von etwa 24 bis etwa 1300 Stunden zwischen etwa 60 und etwa 210°C hält.

9. Verfahren nach einem der Ansprüche 4 bis 8, bei dem das Reaktionsmedium in einem mit einem Rührsystem ausgestatteten Trocknungsofen (Trockenschrank) erwärmt werden kann, um die Reaktionsdauer zu vermindern.
